# EUROPEAN PATENT APPLICATION

(11) **EP 1 164 377 A1**
(43) Date of publication of application: **19.12.2001**
(21) Application number: 01112749.5
(22) Date of filing: 25.05.2001
(51) Int. Cl.: G01P 15/08, G01P 21/00

(54) **Monoaxial biaxial, triaxial accelerometer with a signal analysis processor and output adapted to be connected to a PLC**

(30) Priority: 26.05.2000 IT TO000485
(71) Applicant: Sequoia Automation S.R.L., 10023 Chieri-Turin (IT)
(72) Inventor: Ippolito, Massimo, 10023 Chieri-Turin (IT)

(57) **Abstract**

This invention has for object an acceleration sensor which can assume monoaxial, biaxial and triaxial configurations; the device has an A/D converter and a microprocessor to the signal processing embedded.

The miniaturization allowed to gather all the components in the same little box, in order to fix it directly on the surface of the monitoring object.

The outputs are adapted to be introduced in the logical ones of control (PLC).

The processor supplies in escape the result of quite complex processings, such as:
- Filtering high-pass and low- pass filter
- RMS
- Peak values
- Static and dynamic thresholds
- Memorisation of vibrational repetitive behaviours

## Description

The acceleration sensors are present on the market from many years, but because of their high cost and the complexity of the use, they have found their single uses in the laboratories and in the Companies metrological services. Usually the accelerometers need of external units of conditioning (charge amplifier) and of processing of the beacon (monitoring systems) that increase ulteriorly costs and complexities.

" Smart accelerometer " is a device and a member who drastically reduces the costs and the complexity of the function of monitoring of the accelerations of vibration and the accelerations of movement on machinery. The adjective "smart" indicates that the acceleration beacon comes processed to the inside of the same sensor from a microprocessor, that supplies in escape a digital beacon, that is the result of sophisticated processings and is adapted to directly being connected to the PLC.

### Characteristics:

These sensors are sensitive to the gravity acceleration having a passing band that leaves from the DC and arrive linearly until to 4kHz.
Choosing the opportune model of accelerometer, the acceleration fields are +-2 G,+-5G, +-50G both in monoaxial configuration and in triaxial.

Integrating the measure in the time, inertial indications can be obtained, of speed and position of the system to the which the accelerometer is fixed. The inside processor is predisposed to supply processings of beacon, such as:
- filtering high-pass filter and low-pass filter;
- extraction of the RMS;
- extraction of the vectorial module;
- static threshold of alarm on peak values;
- static or dynamics threshold on RMS memorisation of vibrazional behaviours repetitive with alarm conformity;
- integrations of the acceleration in order not to obtain indications of speed integration;
- integrations of the speed in order to obtain indications of position.

Moreover a seriale line is available in order to communicate with a normal PC that carries out the interface function customer of the sensor.
Through the interface customer it is possible to completely shape the behaviour of the sensor, for adeguate it quickly to the phenomenon to monitoring.

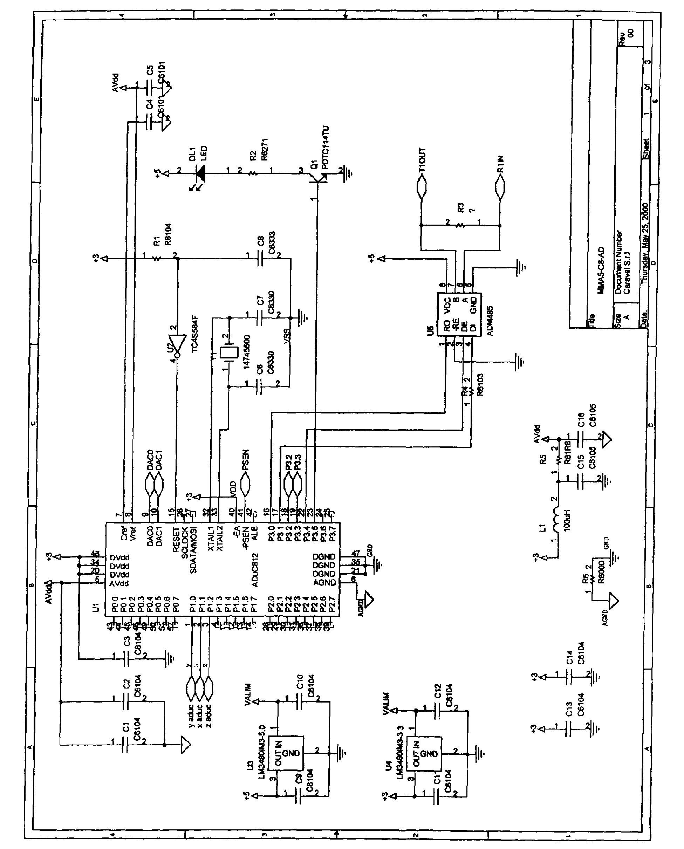

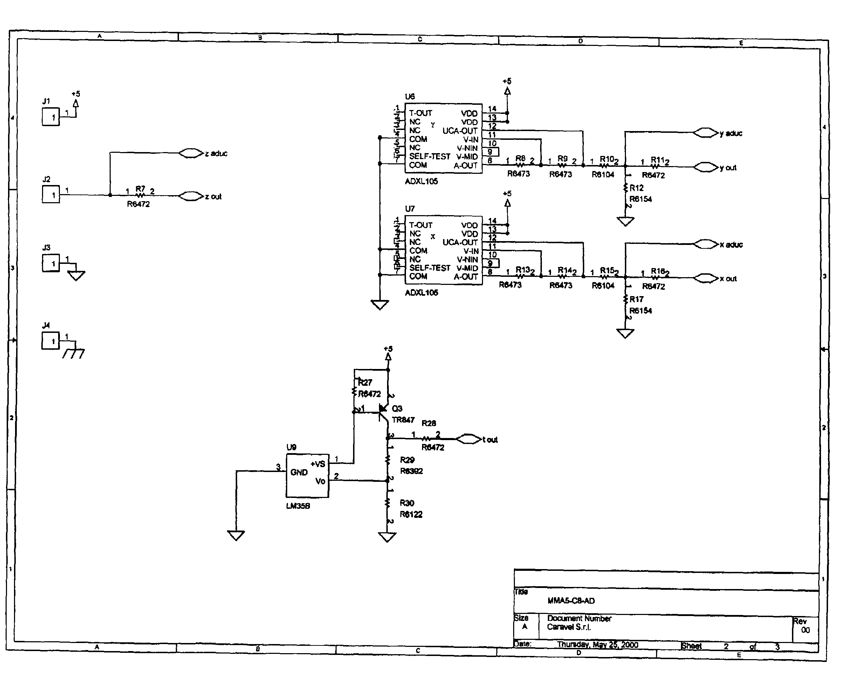

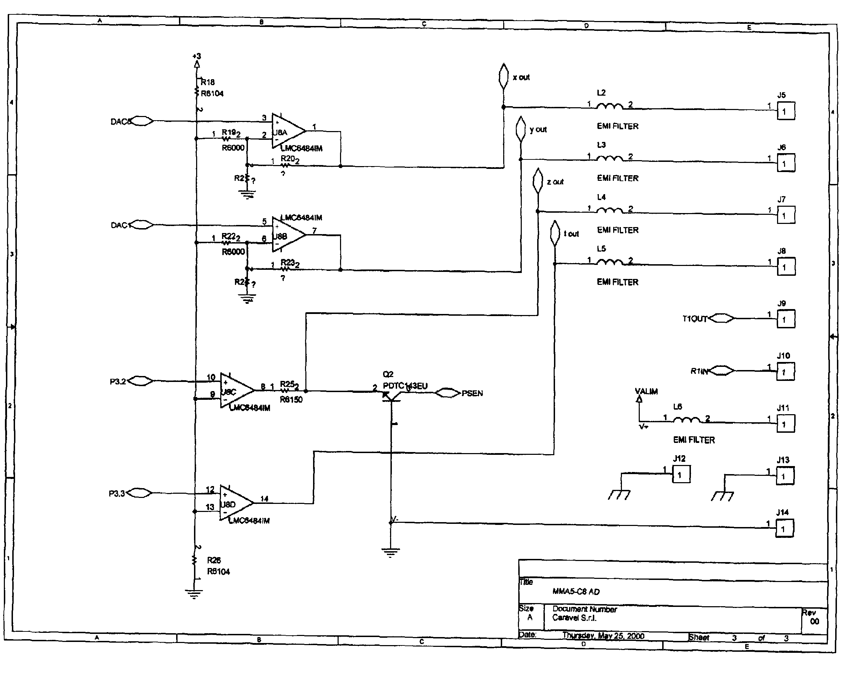

## Claims

1. Accelerometer **characterized by** the feature to be a smart sensor . It means that it is able to perform local and real time processings of the rawdate. Then it provides in output simple event signals suitable for programmable logic controllers.

2. Smart accelerometer **characterized by** the possibility to be directly connected to user interfaces running on common personal computers. With the user interface it is possible to choose the behaviour of the sensor and set or trim the operating parameters.
